# EUROPEAN PATENT SPECIFICATION

(11) **EP 1 892 526 B1**
(45) Date of publication and mention of the grant of the patent: **26.01.2011**
(21) Application number: 06756496.3
(22) Date of filing: 23.05.2006
(51) Int. Cl.: G01N 30/60, B01J 20/10, G01N 30/88

(54) **COLUMN AND CARTRIDGE COLUMN USING SAME**
SÄULE UND KASSETTENSÄULE UNTER VERWENDUNG DAVON
COLONNE ET COLONNE DE CARTOUCHE L UTILISANT

(30) Priority: 24.05.2005 JP 2005150825; 26.12.2005 JP 2005372550; 15.02.2006 JP 2006037883
(43) Date of publication of application: 27.02.2008
(73) Proprietor: HellermannTyton Co., Ltd., Tokyo 1500012 (JP)
(72) Inventor: KANEKO, Nobuyuki c/o HELLERMANNTYTON CO., LTD.,, Hyogo;6712401 (JP); YAJIMA, Yoshitaka c/o HELLERMANNTYTON CO., LTD.,, Hyogo; 6712401 (JP); SAKAMOTO, Yasuyuki c/o HELLERMANNTYTON CO., LTD.,, Hyogo; 6712401 (JP); YASUHARA, Kazushi c/o HELLERMANNTYTON CO., LTD.,, Hyogo; 6712401 (JP)
(74) Representative: Intès, Didier Gérard André
(86) International application number: PCT/JP2006/310240
(87) International publication number: WO 2006/126534

(56) References cited:
- EP-A- 0 434 046
- EP-A- 0 637 748
- WO-A-95/03256
- WO-A-2005/007264
- WO-A1-02/086488
- DE-A1- 19 726 164
- DE-B- 1 079 594
- DE-C2- 19 929 073
- DE-U1- 29 923 289
- JP-A- 07 120 450
- JP-A- 11 064 314
- JP-A- 11 064 314
- JP-A- 51 001 194
- JP-A- 59 210 363
- JP-A- 59 210 363
- JP-A- 2001 330 598
- JP-Y2- 52 035 033
- US-A- 4 737 284

## Description

### Technical Field

The present invention relates to columns that are used for chromatography and cartridge columns including the same.

### Background Art

Recently, for chromatography columns, those formed using monolithic porous bodies made of, for example, porous silica have been proposed instead of powdered separation members. A column proposed as such a column is made using an inorganic porous body (separation member) formed by a sol-gel method (see, for instance, JP 6(1994)-265534 A and JP 7(1995)-41374 A). The columns made using monolithic inorganic porous bodies have properties such as high separation performance, small variations in separation characteristics, and excellent stability. These porous bodies can be used for high-precision analyses and high-speed DNA separation.

A column including a porous body around which is protected with a circular cylinder including a heat shrinkable tube and a thermoplastic resin layer is proposed as one of the columns formed using monolithic porous bodies (see JP 10(1998)-197508).

However, in the case of a column formed using a heat shrinkable tube, when a porous body has a concave portion at the surface thereof, the concave portion cannot be filled with the heat shrinkable tube and thereby the concave portion may form a gap. Furthermore, a gap may be generated between the porous body and the neat shrinkable tube due to pressure applied in use. These gaps cannot be repaired once they are generated. They may be enlarged further or respective gaps may be joined together. When a long gap is formed, the material to be separated may pass not through not the porous body but the gap and thereby separation may not be carried out with high precision in some cases. This problem is particularly noticeable when using a plurality of columnar porous bodies arranged in series. Furthermore, inorganic porous bodies formed by the sol-gel method may include minute unevenness at the surface thereof. In that case, the above-mentioned problem also is noticeable.

A cartridge column having the features defined by the preamble of claim 1 is disclosed by JP 59210363.

### Disclosure of Invention

The present invention is intended to provide a cartridge column comprising a highly reliable column including a vitreous porous body used as a separation member.

In order to achieve the aforementioned object, a column used in the present invention is one that is used for chromatography and includes a tube and at least one columnar separation member disposed inside the tube. The separation member is a vitreous porous body, and the tube is an elastomer tube.

In the column used in the present invention, the separation member is held with an elastomer tube having rubber-like elasticity. Accordingly, even when the separation member has an uneven surface or has variations in size, gaps can be prevented from being formed between the separation member and the elastomer tube.

Moreover, a cartridge column of the present invention is one that includes a column used for chromatography and a housing for holding the column. The column includes a tube and at least one columnar monolithic separation member disposed inside the tube. The separation member is a vitreous porous body, and the tube is an elastomer tube. The housing includes a pressing member that can move to press an end face of the tube and a rotation preventing means for preventing the pressing member from rotating with respect to the end face of the tube when the pressing member moves.

In the cartridge column of the present invention, since the elastomer tube is disposed between the separation member and the housing, the elastomer tube and the separation member are in close contact with each other. As a result, material to be separated can be prevented from passing through outside the separation member.

In this specification, the term "tube" embraces structures having short lengths in the central axis direction, i.e. those with ring shapes.

### Brief Description of Drawings

FIG. 1 is a cross-sectional view showing an example of the column used in the present invention.
FIG. 2A is a cross-sectional view showing an example of the elastomer tube, and FIG. 2B is a cross-sectional view showing an example of the separation member.
FIG. 3 is a cross-sectional view showing an example of a cartridge column.
FIG. 4 is an exploded perspective view showing a part of the cartridge column as shown in FIG. 3.
FIG. 5 is a cross-sectional view showing the state, in use, of the cartridge column as shown in FIG. 3.
FIG. 6A is a top view showing another example of the column according to the present invention, and FIG. 6B is a cross-sectional view thereof. FIG. 6C is a top view showing still another example of the column according to the present invention, and FIG. 6D is a cross-sectional view thereof.
FIG. 7 is a cross-sectional view showing another example of a cartridge column.
FIG. 8A is an exploded perspective view showing an example of the holder to be used for a cartridge column of the present invention, FIG. 8B is an exploded perspective view showing another example of the holder to be used for a cartridge column of the present invention, and FIG. 8C is a perspective view of the holder shown in FIG. 8B that has been assembled.
FIG. 9 is a cross-sectional view showing still another example of a cartridge column.
FIG. 10 is a cross-sectional view showing the shape of the elastomer tube.
FIGs. 11A and 11B each are a chromatogram obtained by using a cartridge column.
FIG. 12 is an exploded perspective view showing an example of the cartridge column according to the present invention.

### Description of the Preferred Embodiments

Hereinafter, embodiments of the present invention are described, along with examples useful for understanding the cartridge column of the present invention as defined in claim 1.

### [Column]

The column used in the present invention is one used for chromatography and includes a tube and at least one columnar separation member (a carrier for separation) disposed inside the tube. The separation member is a vitreous porous body. The tube is an elastomer tube. The elastomer tube generally has a cylindrical shape.

The elastomer tube is formed of a material with rubber-like elasticity. A typical example of the elastomer is rubber, and the elastomer tube can be a rubber tube. In the following description, the term "elastomer" can be read to denote "rubber".

It is preferable that the elastomer tube be formed with a material having a high chemical resistance, depending on the material to be separated.

The elastomer tube can be formed of, for instance, fluororubber or can be formed of silicone rubber or petroleum synthetic rubber. Examples of the petroleum synthetic rubber include nitrile rubber (NBR), styrene-butadiene copolymer rubber (SBR), acrylic rubber (ACM), chloroprene rubber (CR), ethylene-propylene rubber (EP), and isobutylene-isoprene copolymer rubber (IIR). The fluorinated elastomer (for example, fluororubber) is preferable due to its high chemical resistance and heat resistance. Examples of the fluororubber include vinylidene fluoride rubber, tetrafluoroethylene-propylene rubber, and tetrafluoroethylene-perfluoromethyl vinyl ether rubber (FFKM). Another example of the fluorinated elastomer is perfluoroelastomer. Among these materials, perfluoroelastomer and FFKM are preferable due to their high chemical resistance and heat resistance.

When the elastomer tube is excessively thin, the properties of elastomer cannot be exhibited sufficiently. Accordingly, it is preferable that the thickness *t* of a part of the elastomer tube in which the separation member is housed be at least a certain thickness. In one example, the thickness *t* of the elastomer tube in the normal state (the state where no external force is applied) can be at least 0.1 mm (for example, at least 0.5 mm, or at least 2.5 mm in the case of an example). The thickness *t* can be 20 mm or less, for example. However, the upper limit of the thickness *t* is not particularly limited and can be in the range of 0.01 to 1 times the diameter of the separation member, for example.

Although the preferable hardness of the elastomer tube also depends on the thickness *t* of the elastomer tube, it can be in the range of A/20 to A/100 (for example, in the range of A/40 to A/90) or D/60 or lower in terms of hardness measured with the durometer-type hardness tester (JIS-K-6253), for example.

An example of the elastomer tube has a thickness *t* in the range of 2 mm to 4 mm and a hardness (JIS-K-6253) in the range of A/50 to A/80.

The elastomer tube needs to have a high elasticity. It therefore is not possible to use tubes formed of resins with no rubber-like elasticity, such as Teflon (registered trademark) and polyetheretherketone (PEEK).

The column of the present invention can be monolithic in such a manner that the separation member and the elastomer tube cannot be detached. In this case, the length of the separation member and that of the elastomer tube generally are set to be substantially equal to each other. This column can be formed by applying liquid elastomer to the outer periphery of the separation member and then curing it, for example. Examples of typical liquid elastomer include fluorinated rubber and silicone rubber.

In the column used in the present invention, the separation member can be disposed detachably inside the elastomer tube. When the separation member is detachable, the separation ability of the column can be set freely by arbitrarily changing the type or number of the separation members to be disposed inside the elastomer tube. Furthermore, when the performance of the separation member has deteriorated due to use, it is possible to replace the separation member alone. When the number of the separation members is to be decreased, a cylindrical spacer can be disposed inside the elastomer tube in place of the separation member.

The column used in the present invention can have a configuration in which a plurality of separation members can be disposed inside one elastomer tube. In this case, the length of one separation member (the length in the central axis direction of a columnar separation member) generally is at most half the length of the elastomer tube (the length in the central axis direction of the tube). The number of separation members that can be disposed inside one elastomer tube can be, for example, at least two, at least three, or at least four. The upper limit thereof is not particularly determined but it can be ten or less or five or less. When a plurality of separation members are disposed inside a column, all the separation members are vitreous porous bodies.

Furthermore, it also is possible to employ a configuration in which only one separation member can be disposed inside one elastomer tube. In this case, the length of the separation member generally is more than 0.5 times but not more than 1 times the length of the elastomer tube.

The separation member of the column used in the present invention is different from powdered separation members and is a monolithic separation member having a columnar shape (including a disk shape). A typical shape of the separation member is a cylindrical column whose cross-sectional shape is a perfect circle. In the separation member, however, the cross-sectional shape does not need to be a perfect circle and the end face does not need to be a planar surface. For instance, the end face can be a curved surface. Moreover, the cross-sectional shape of the separation member according to the present invention can be a rounded shape obtained by rounding the corners of a quadrangle.

In another aspect, the column of the present invention includes a separation member with a pillar shape (including a disc shape) and an elastomer tube that houses the separation member. This elastomer tube is provided with a through hole for housing the separation member, and the cross-sectional shape of the through hole is identical to that of the separation member or a circular shape.

The separation member is a vitreous porous body (substantially an inorganic porous body, including, for example, glass and glass ceramics). It can be a vitreous porous body formed using the sol-gel method, specifically a porous gel obtained by using the sol-gel method or a porous body obtained by heat-treating the gel. For instance, a vitreous porous body can be used that is formed by a known sol-gel method using metal alkoxide (for example, alkoxysilane) or metal halide as a starting material. The separation member also can be a vitreous porous body that contains an organic component and can be formed using, as one of the starting materials, metal halide or metal alkoxide including an organic group bonded thereto.

This vitreous porous body can have a modified surface so as to have improved separation ability. For example, a functional group or an organic molecule can be bonded to the surface of the vitreous porous body (including the case where an organic molecule with a functional group is bonded). The functional group or the organic molecule for modifying the surface of the vitreous porous body can be selected according to the separation ability to be required. For them, known groups or molecules that are used for separation members can be used including, for example, a hexyl group, an octyl group, other alkyl groups, octadecylsilane, an octadecyl group, a phenyl group, a trimethylsilyl group, a cyano group, and an amino group.

A typical example of the vitreous porous body is a porous body whose main component (at least 50 mass%) is silicon oxide, for example, porous silica glass. However, it also can be a vitreous porous body (inorganic porous body) containing an oxide other than silicon oxide or a vitreous porous body (inorganic porous body) whose main component is an oxide other than silicon oxide. The monolithic gel (vitreous porous body) formed by the sol-gel method is preferable because it allows the porosity or pore diameter to be controlled relatively easily and has small variations in separation ability.

The separation member to be used can be a commercially available vitreous porous body. It also can be formed by using a known sol-gel method. For instance, it can be formed by the methods described in JP 6(1994)-265534 A and JP 7(1995)-41374A. These methods allow columnar porous silica glass (porous silica gel) to be formed.

The separation member to be used can be one including both through holes with relatively large diameters and fine pores with small pore diameters. For instance, it can be a vitreous porous body that can be produced by the production method described in JP 6(1994)-265534 A, specifically a vitreous porous body including a number of through holes with diameters of 500 nm to several tens of micrometers (for example, 30 µm) and a number of fine pores with diameters of 5 nm to 100 nm. The total volume of the fine pores of this vitreous porous body is in the range of, for example, 0.001 m³/kg to 0.01 m³/kg (1 m³/t to 10 m³/t).

The separation ability of the vitreous porous body (separation member) varies depending on, for example, the diameter of the pores, porosity, and specific surface area of the porous body. Accordingly, those values are controlled depending on the separation ability to be required. They can be controlled by changing the conditions for producing the porous body, particularly the conditions employed in the sol-gel method.

### [Example of column]

A column in which a plurality of separation members are disposed detachably inside an elastomer tube is described as an example of the column according to the present invention.

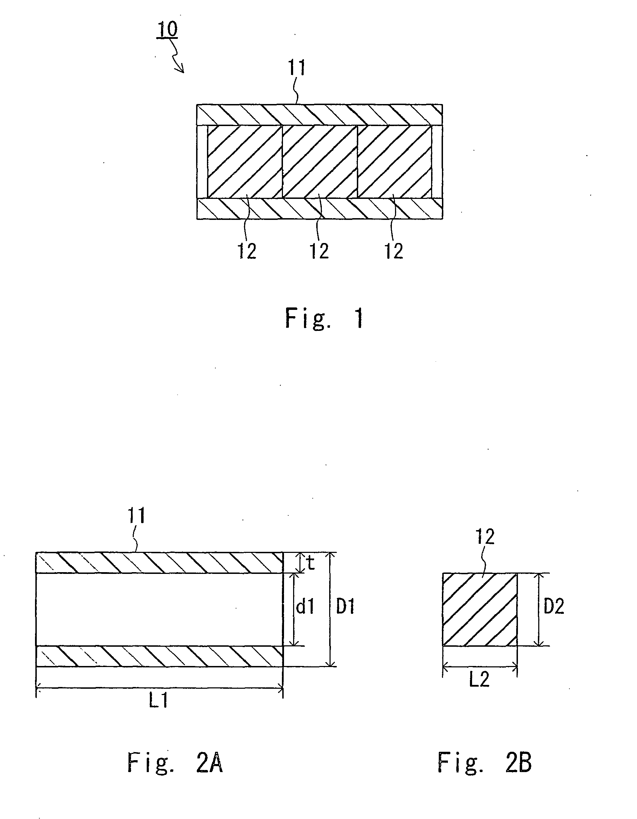

FIG. 1 shows a cross-sectional view of an example of the column according to the present invention. A column 10 shown in FIG. 1 includes an elastomer tube 11 and three columnar separation members 12 disposed inside the elastomer tube 11. The separation members 12 are pressed into the through hole of the elastomer tube 11 to be disposed inside the elastomer tube 11. Therefore the separation members 12 can be removed easily from the elastomer tube 11. The cross-sectional view of the elastomer tube 11 is shown in FIG. 2A and that of a separation member 12 is shown in FIG. 2B.

The example shown in FIG. 1 is an example in which three separation members 12 are disposed inside the elastomer tube 11, but the present invention is not limited thereto. The number of the separation members 12 to be disposed inside the elastomer tube 11 can be one or two or more. The separation ability of the column can be varied by changing the number of the separation members 12 to be disposed inside the elastomer tube 11. The elastomer tube 11 can be varied in length according to the number of the separation members 12 to be used. Furthermore, when the elastomer tube is too long with respect to the total length of the separation members 12, a cylindrical spacer can be disposed inside the elastomer tube 11.

When a plurality of separation members 12 are disposed inside the elastomer tube 11, the separation members 12 to be disposed can be of the same type, or a plurality of types with different separation abilities. The column of the present invention is different from the conventional columns, in which separation members are held by a heat shrinkable tube, in that users can select the number and type of the separation members 12 easily according to the intended use. In the column of the present invention, however, the elastomer tube 11 and the separation members 12 can be fixed to each other beforehand.

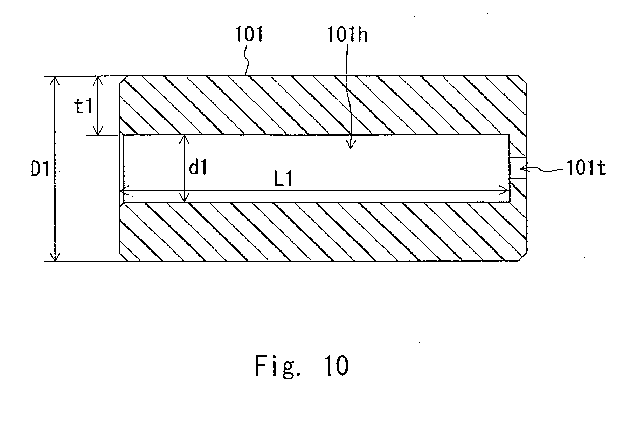

FIG. 1 shows the elastomer tube 11 with a through hole having a uniform diameter, but the through hole does not need to have a uniform diameter. For example, the through hole of the elastomer tube 11 can be formed of a combination of a through hole for housing the separation members 12 and a smaller through hole for not housing the separation members 12 but passing material to be separated therethrough (see FIG. 10).

The sum of the lengths L2 of the separation members 12 (see FIG. 2B) generally is shorter than the length L1 of the elastomer tube 11 in the normal state. For instance, when three separation members 12 are disposed inside an elastomer tube 11, the length L1 is longer than three times the length L2. For example, the length of the elastomer tube 11 can be longer by 0 mm to 5 mm (in an example, 0.2 mm to 4 mm) than the sum of the lengths of the separation members 12. When the length of the through hole for housing the separation members 12 is set to be longer than the sum of the lengths of the separation members 12, the whole body of the separation members 12 is disposed inside the through hole of the elastomer tube 11. That is, the end faces of the separation members 12 are disposed on the inner sides of the through hole of the elastomer tube 11 with respect to the end faces of the elastomer tube 11.

In the elastomer tube 11, the inner diameter d1 (mm) of the part where the separation members 12 are housed is approximately identical to the diameter D2 (mm) of the separation members 12 (see FIGs. 2A and 2B). Generally, a relationship (d1-1.0) ≤ D2 ≤ (d1+1.0) holds, for example, (d1-0.3) ≤ D2 ≤ (d1+0.3), and for instance, (d1-0.1) ≤ D2 ≤ d1.

In the case of D2 > d1, the separation members 12 can be placed inside the elastomer tube 11, with the through hole of the elastomer tube 11 being stretched. In this case, by merely placing the separation members 12 inside the elastomer tube 11, the outer peripheral surfaces of the separation members 12 can be in close contact with the inner peripheral surface of the elastomer tube 11.

On the other hand, in the case of D2 < d1, it becomes easy to place the separation members 12 inside the elastomer tube 11. Since a tube with rubber-like elasticity is used for the column of the present invention, the thickness *t* of the tube can be increased and the inner diameter d1 of the elastomer tube 11 can be reduced by compressing the tube inside the housing to be described later. Accordingly, even in the case of D2 < d1 in the normal state, the outer peripheral surfaces of the separation members 12 and the inner peripheral surface of the elastomer tube 11 can be brought into close contact with each other inside the housing.

### [Cartridge column]

Hereinafter, a cartridge column of the present invention is described. The cartridge column of the present invention includes a column that is used for chromatography and a housing for holding the column. The column is that of the present invention described in this specification. As described above, the column includes a tube and at least one columnar separation member disposed inside the tube. The separation member is a vitreous porous body, and the tube is an elastomer tube.

In the cartridge column of the present invention, the separation member is held with a tube having rubber-like elasticity. Accordingly, even when the separation member has a concave portion at the surface thereof, the concave portion can be prevented from forming a gap. Furthermore, even when a gap is formed between the elastomer tube and the separation member due to high pressure applied to the column when chromatography is carried out, the gap is reduced in size due to the rubber elasticity. Accordingly, the cartridge column of the present invention can particularly prevent the material to be separated from leaking through a gap present around the separation member.

The material used for the housing is not particularly limited and the housing can be formed of a material with suitable strength. The housing can be formed of, for example, a material with an R scale of at least 15 in terms of Rockwell hardness (ASTMD785). Examples of the material for the housing include nylon, polyphenylene sulfide (PPS), liquid crystal polymer (LCP), polyester, polyphenylene oxide (PPO), acryl, polypropylene (PP), ABS resin, polyetheretherketone (PEEK), fluororesin, silicone resin, and resins containing various fillers mixed therein. Apart or the whole of the housing can be formed of metal.

In the cartridge column of the present invention, the housing can hold the column while pressing the two end faces of the elastomer tube. This can prevent a gap from being formed between the elastomer tube and the separation member. Furthermore, the housing can hold the column while pressing the two end faces and outer peripheral surface of the elastomer tube.

In the cartridge column of the present invention, the elastomer tube can be compressed in the direction of the central axis thereof in the housing. The elastomer tube compressed in the direction of the central axis has a smaller inner diameter than that in the normal state. As a result, a closer contact between the tube and the separation member is achieved. The compressible length of the elastomer tube in the housing can be 0.1% to 50% (for example, 1.5% to 25%) of the length of the elastomer tube in the normal state.

In the cartridge column of the present invention, the sum of the lengths of the separation members (lengths in the central axis direction of the separation members) disposed inside the elastomer tube can be shorter than the length of the elastomer tube (the length in the central axis direction of the elastomer tube). In this configuration, it is possible to reduce the inner diameter of the elastomer tube by compressing the elastomer tube in the central axis direction thereof. The length obtained by subtracting the sum of the lengths of the separation members disposed inside the elastomer tube from the length of the elastomer tube can be 0.1% to 50% (for instance, 1.5% to 25%) of the length of the elastomer tube in the normal state.

Even if the sum of the lengths of the separation members is longer than the length of the elastomer tube, when the end faces alone of the elastomer tube can be pressed by, for example, using O-rings or using a suitable shape of the housing, it is possible to compress the elastomer tube.

In the cartridge column of the present invention, the housing can include a holding member in which a columnar hole into which a tube fits is formed, and a pressing surface that presses the end faces of the tube protruding from the holding member against the holding member side. The depth of the columnar hole is less than the length of the tube.

In the cartridge column of the present invention, a plurality of columns can be disposed inside the housing.

In the cartridge column of the present invention, the housing can include a cylindrical holder in which the column is disposed and the holder can be divided. The use of a holder that can be divided in the longitudinal direction allows a column (elastomer tube) to be disposed easily inside the holder even when the column is long.

In the cartridge column of the present invention, the housing includes one or more pressing members that can move to press the end faces of the elastomer tube, and the pressing members can move without rotating with respect to the end faces of the elastomer tube. Since the pressing members are provided so as to be able to move without rotating with respect to the end faces of the elastomer tube, the elastomer tube is not rotated to be twisted when the column is placed inside the housing. Therefore the separation members disposed inside the elastomer tube can be prevented from being damaged. The housing further includes a rotation preventing means for preventing the pressing members from rotating with respect to the end faces of the elastomer tube when the pressing members are moved. For instance, when the housing includes a holder for housing a column inside thereof, the rotation preventing means can be formed of an engaging part provided for each pressing member and an engaging part provided for the holder. When the configuration in which the engaging part of the pressing member and that of the holder are engaged with each other is employed, it prevents the pressing members from rotating with respect to the holder and therefore the pressing members can move without rotating with respect to the elastomer tube.

### [Example of cartridge column]

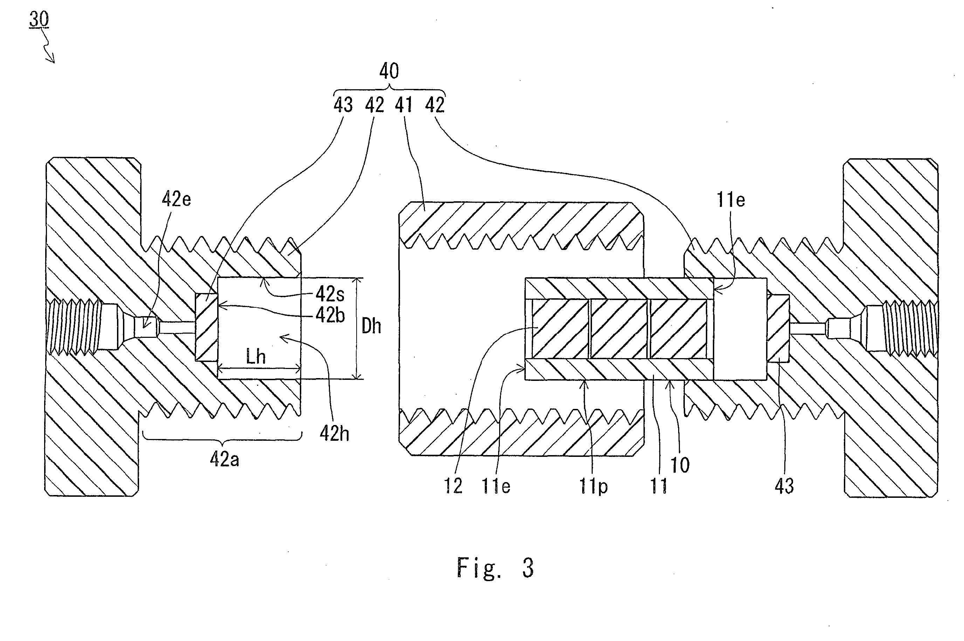

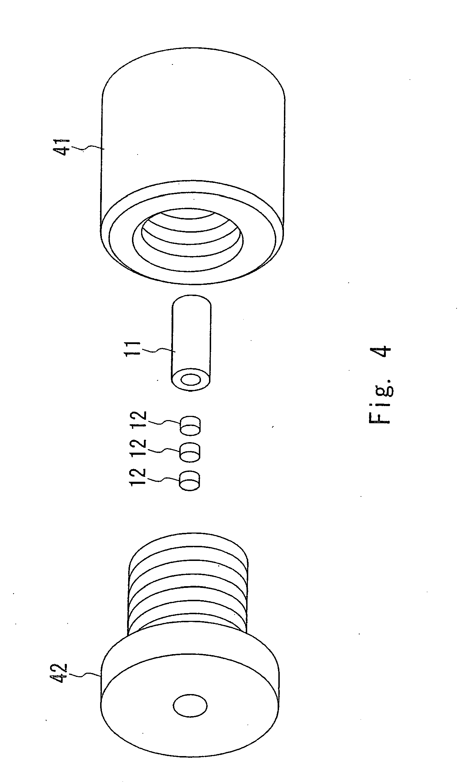

FIG. 3 shows a cross-sectional view of an example of a cartridge column. A cartridge column 30 shown in FIG. 3 includes a column 10 and a housing 40. The column 10 is the one shown in FIG. 1. The housing 40 includes a holder 41, two caps 42, and filters 43. FIG. 4 shows a perspective view of the cap 42, separation members 12, an elastomer tube 11, and the holder 41. The filters 43 are used for removing impurities such as suspended matters. The filters 43 can be omitted depending on the conditions.

Generally, the holder 41 and caps 42 each are formed of a hard material such as metal or resin (for instance, fluororesin). The holder 41 has a cylindrical shape and is provided with a thread groove formed at its inner peripheral surface.

The caps (holding members) 42 each are provided with a columnar portion 42a with a thread formed to engage with the thread groove of the holder 41. The columnar portion 42a has a columnar hole 42h formed therein. The filters 43 each is disposed on the bottom surface 42b of the columnar hole 42h. Furthermore, an O-ring can be disposed around the filter 43. An O-ring that is used often is formed of resin with high chemical resistance, such as fluororesin and silicone resin.

The elastomer tube 11 of the column 10 is fitted into the hole 42h. The bottom surface 42b (including the surface of the filter 43) of the hole 42h serves as a pressing surface for pressing the end face 11e of the elastomer tube 11 toward the middle of the elastomer tube 11. In other words, in this example, one of the two caps 42 serves as the holding member and the bottom surface 42b of the hole 42h provided for the other cap serves as the pressing surface. Moreover, the side wall 42s of the hole 42h serves as a surface for pressing the outer peripheral surface 11p of the elastomer tube 11.

Furthermore, the cap 42 includes a feed port 42e formed therein, through which material to be separated is fed. In the feed port 42e, a thread groove is formed. The material to be separated reaches the separation member 12 through the filter 43 from the feed port 42e.

The inner diameter Dh (mm) of the hole 42h is approximately equal to the outer diameter D1 of the elastomer tube 11 in the normal state (see FIG. 2A). Generally, the relationship Dh-2.0 ≤ D1 ≤ Dh+2.0 holds, for example, the relationship Dh-1.0 ≤ D1 < Dh holds. Even if the relationship D1 < Dh holds in the normal state, the thickness *t* of the elastomer tube 11 increases in use and therefore the outer diameter D1 of the elastomer tube 11 increases to allow the outer peripheral surface of the elastomer tube 11 to be in close contact with the side wall of the hole 42h.

In the cartridge column 30, the distance between the two pressing surfaces (bottom surfaces 42b) that press the two end faces of the elastomer tube 11 is set to be shorter than the length L1 of the elastomer tube 11, so that the elastomer tube 11 is compressed. Accordingly, the cartridge column 30 is configured so that the distance between the two pressing surfaces can be set to be shorter than the length L1.

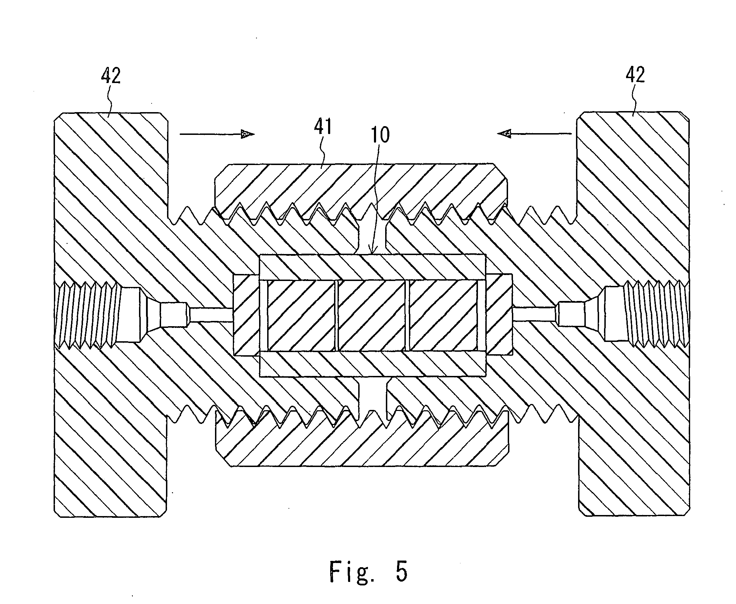

In the cartridge column 30 shown in FIG. 3, the depth Lh (mm) of the hole 42h is less than the half the length L1 (mm) of the elastomer tube 11. For example, the relationship 2Lh - 5.0 ≤ L1 < 2Lh may hold. In the case where the depth Lh is less than the half the length L1, when the caps 42 are screwed into the holder 41 and thereby the distance between the bottom surfaces of the holes 42h of the two caps 42 becomes equal to the length L1, a gap is present between the two caps 42 (see FIG. 5). When the caps 42 further are screwed into the holder 41 so as to reduce the gap, the length L1 of the elastomer tube 11 is reduced and the thickness *t* is increased. Therefore as the caps 42 are screwed into the holder 41, the wall surfaces of the holes 42h and the outer peripheral surface of the elastomer tube 11 as well as the inner peripheral surface of the elastomer tube 11 and the outer peripheral surfaces of the separation members 12 are brought into close contact with each other with strong force, respectively. Similarly, the bottom surfaces 42b of the holes 42h and the end faces 11e of the elastomer tube 11 also are brought into close contact with each other with strong force, respectively. As described above, the caps 42 are screwed into the holder 41 and thereby the material to be separated can be prevented from passing through, for example, between the elastomer tube 11 and the separation members 12.

The housing 40 does not need to hold the whole outer peripheral surface of the elastomer tube 11 but can hold a part thereof. For instance, as shown in FIG. 5, there is no problem even when the part of the outer peripheral surface located in the middle of the elastomer tube 11 is not held.

The method of shortening the distance between the two pressing surfaces that press the two end faces of the elastomer tube 11 is not particularly limited. The housing used for the cartridge column of the present invention can have various shapes and configurations, as long as it has a configuration that allows the column to be held while pressing the two end faces (preferably, also the outer peripheral surface) of the elastomer tube. For instance, the elastomer tube 11 can be compressed with one cap 42 alone, with one end of the holder 41 serving as a pressing surface having a through hole formed therein.

### [Other examples of column and cartridge column]

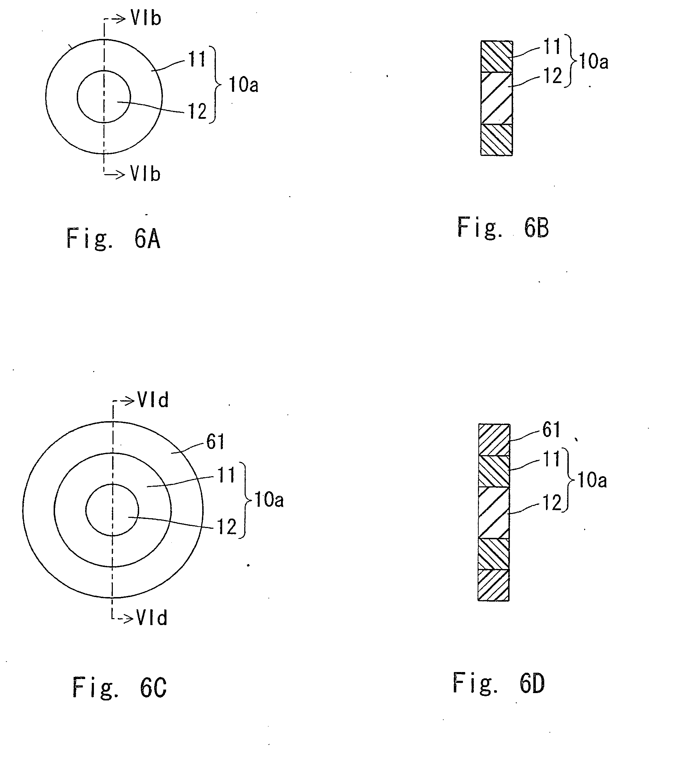

Hereinafter, an example of the column in which only one separation member is disposed detachably inside one elastomer tube is described as a column used in the present invention. FIG. 6A shows a top view of the example of the column and FIG. 6B shows a cross-sectional view at line VIb - VIb shown in FIG. 6A.

A column 10a shown in FIG. 6A includes an elastomer tube 11 and a separation member 12 disposed in the elastomer tube 11. The elastomer tube 11 and the separation member 12 are identical to those described above. In this example, however, the length L1 (see FIG. 2A) of the elastomer tube 11 is approximately equal to the length L2 (see FIG. 2B) of the separation member 12 or is slightly longer than the length L2.

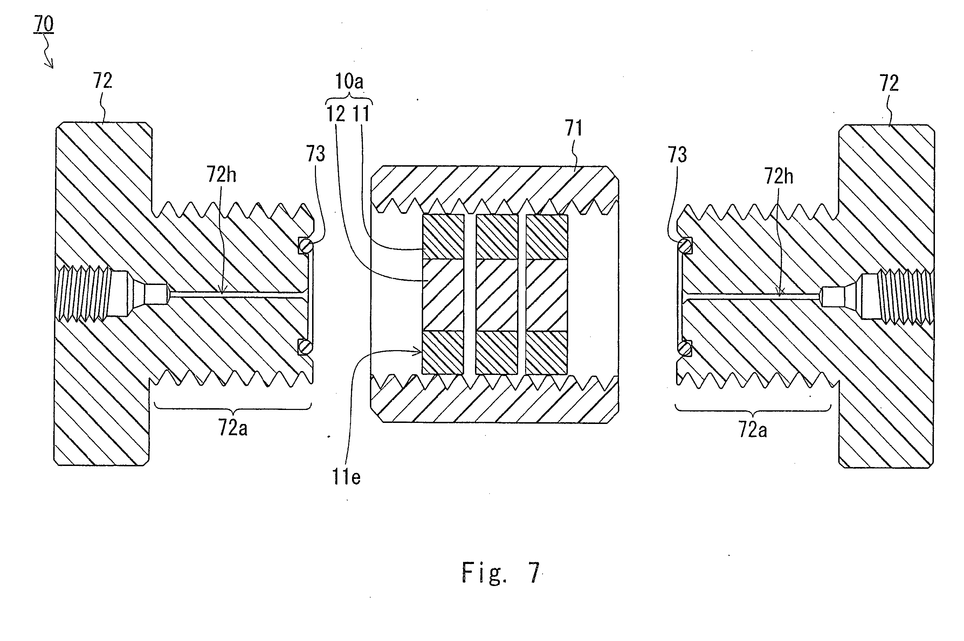

FIG. 7 shows an exploded cross-sectional view of an example of the cartridge column formed using the column 10a. A cartridge column 70 shown in FIG. 7 includes a column 10a and a housing for holding the column 10a. The housing is provided with a cylindrical holder 71, two caps 72 that are screwed into ends of the holder 71, and two O-rings 73. At least one column 10a is disposed inside the holder 71. At least one column 10a and at least one spacer can be disposed inside the holder 71. In this case, the outer diameter of the spacer is approximately equal to the outer diameter of the elastomer tube 11, and a through hole is formed in the center portion of the spacer.

The holder 71 has a thread groove formed at its inner peripheral surface. The inner diameter of the holder 71 is approximately equal to or slightly larger than the outer diameter of the column 10a.

Each cap 72 has a through hole 72h formed to pass material to be separated. The cap 72 is provided with a columnar portion 72a with a thread formed to engage with the thread groove of the holder 71. An annular groove where the O-ring 73 is to be disposed is formed at the end face of each columnar portion 72a. The O-ring 73 and the end face 11e of the elastomer tube 11 are in contact with each other through the annular portion having a diameter that is at least the inner diameter d1 but is not larger than the outer diameter D1 of the elastomer tube 11. Accordingly, when the caps 72 are screwed into the holder 71 to allow the O-rings 73 to press the two end faces 11e of the elastomer tube 11, material to be separated can be prevented from leaking at the place of the O-rings 73 and between adjacent elastomer tubes 11.

The volume of the region (for example, the through hole 72h) where materials to be separated pass through without being separated in each cap is preferably as small as possible. Generally, the diameter of the through hole 72h is 0.1 mm to 1.0 mm (for example, 0.2 mm to 0.5 mm).

The through hole (the through hole of each cap) can flare out at the end facing the separation member so that the material to be separated permeates throughout the separation member. The length of the portion flaring out is generally 0.1 mm to 1.0 mm (for instance, 0.2 mm to 0.5 mm). The grooves in the caps and holder are formed generally at a pitch of 2 mm or less (for example, 1.5 mm or less).

When there is a gap between the outer diameter of the elastomer tube 11 and the inner diameter of the holder 71, a spacer can be used for filling the gap. FIG. 6C shows a top view of the column 10a provided with such a spacer, and FIG. 6D shows a cross-sectional view at line VId - VId shown in FIG. 6C. The spacer 61 is disposed around the outer peripheral part of the column 10a. The inner diameter of the spacer 61 is approximately equal to the outer diameter of the elastomer tube 11.

### [Another example of cartridge column]

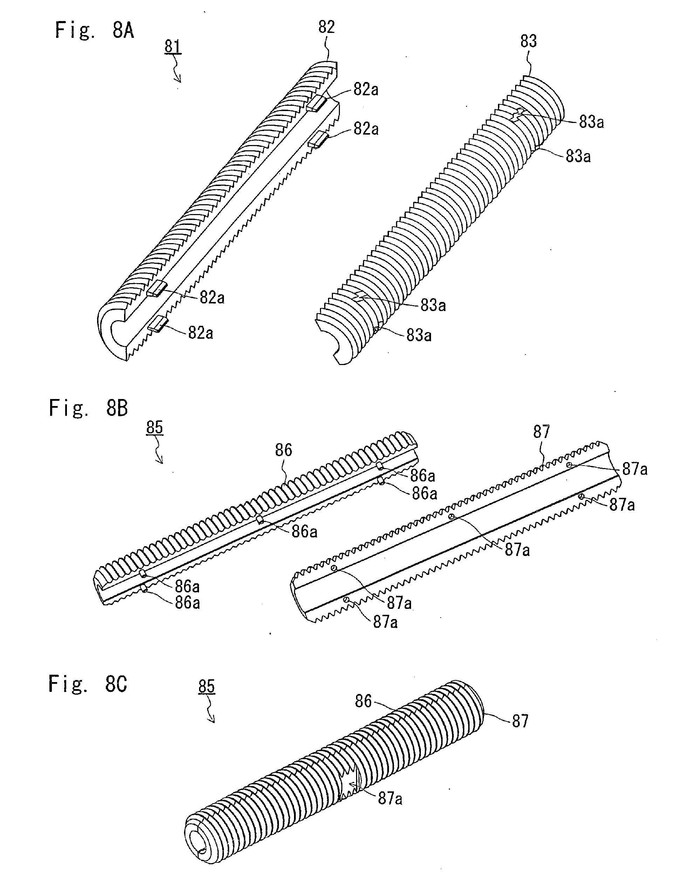

Hereinafter, an example of a cartridge column in which the outer peripheral surface of the elastomer tube 11 is held by a dividable holder is described. FIG. 8A shows an exploded perspective view of an example of the holder for the cartridge column 80. FIG. 8B shows an exploded perspective view of another example of the holder, and FIG. 8C shows a perspective view of the holder shown in FIG. 8B that has been assembled.

A holder 81 shown in FIG. 8A and a holder 85 shown in FIG. 8B each are divided at a cross section along the central axis of the cylindrical holder. The two divided holders can be fixed to each other by a fixing means.

The holder 81 shown in FIG. 8A is composed of a holder 82 and a holder 83. The holder 82 has protrusions 82a to serve as a fixing means, with the protrusions 82a being provided with hook portions. The holder 83 includes holes 83a formed to serve as a fixing means and the holes 83a catch the protrusions 82a. The holder 82 and the holder 83 are fixed together, with the protrusions 82a being caught by the holes 83a. Thus a cylindrical holder 81 is formed. The holder 81 has a thread formed at its outer peripheral surface.

The holder 85 shown in FIG. 8B is composed of a holder 86 and a holder 87. The holder 86 includes protrusions 86a to serve as a fixing means. The holder 87 includes holes 87a to serve as a fixing means, with the holes 87a corresponding to the protrusions 86a. The holder 86 and the holder 87 are fixed together, with the protrusions 86a being inserted in the holes 87a. In the holder 86 shown in FIG. 8B, a plurality of protrusions 86a are formed asymmetrically with respect to the central axis. Such a configuration can prevent the holders from being assembled with each of the holders being placed in the wrong directions. As shown in FIG. 8C, a flat notch 87b is formed in a part of the holder 87. Although it is not shown in the drawings, an identical notch also is formed in the holder 86. The holders can be fixed together by holding the notches with spanners when the caps are tightened or loosened.

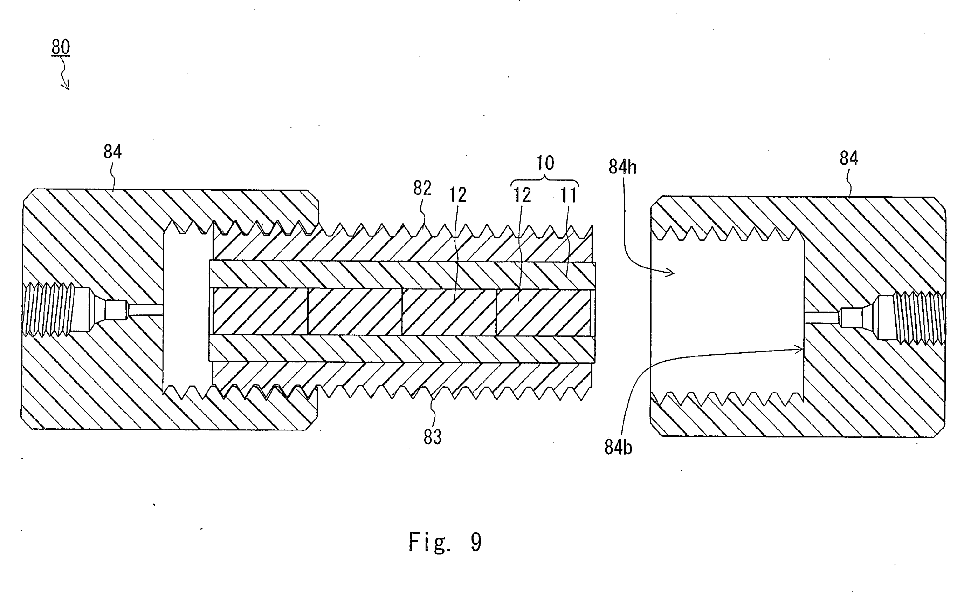

FIG. 9 shows an exploded sectional view of the cartridge column 80 including the holder 81. The cartridge column 80 includes a holder 81 (holders 82 and 83), a column 10 disposed inside the holder 81, and two caps 84. The column is the column used in the present invention described above and includes the elastomer tube 11 and separation members 12.

Each cap 84 has a cylindrical concave part 84h formed therein. The concave part 84h has a thread groove that engages with the thread of the holder 81 and is formed at the inner peripheral surface thereof. When the column 10 is disposed inside the holder 81 and both the ends of the holder 81 are tightened with the caps 84, both the ends of the elastomer tube 11 are pressed by the bottom surfaces 84b of the concave parts 84h and thereby the elastomer tube 11 and the bottom surfaces 84b are brought into close contact with each other. Thus, the material to be separated can be prevented from leaking as in the case of the cartridge column 30.

In the cartridge column 80, since the holder 81 can be divided, the column can be set inside the holder 81 easily even when the elastomer tube 11 is long or a plurality of columns are used. This cartridge column is particularly effective when the column to be disposed inside the holder has a length (when a plurality of columns are disposed, the sum of the lengths of the columns) of at least 40 mm (for example, at least 90 mm).

### [Another example of cartridge column]

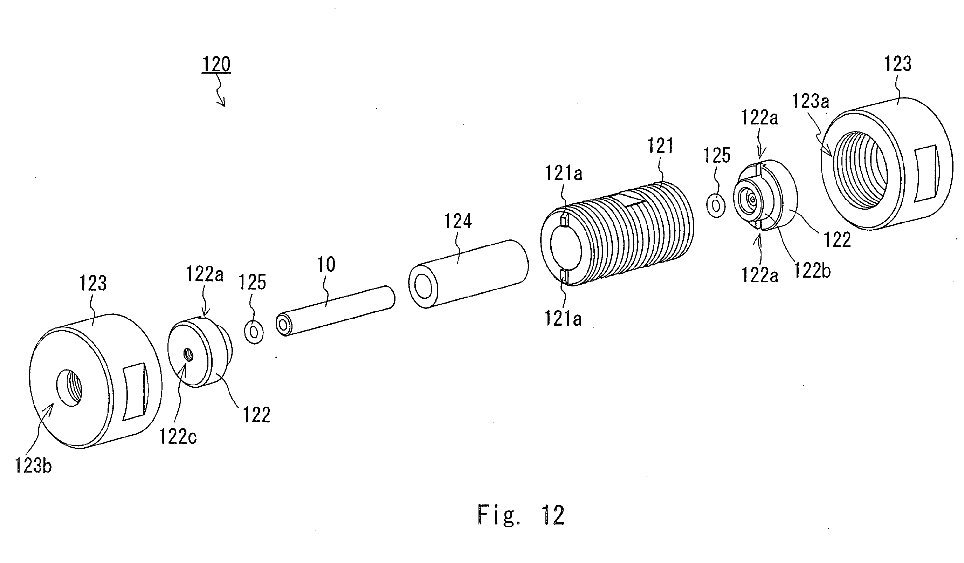

Hereinafter, an example of the cartridge column in which pressing members are provided to be able to move to press the end faces of the elastomer tube and can move without rotating with respect to the end faces of the elastomer tube is described as a cartridge column of the present invention. FIG. 12 shows an exploded perspective view of the cartridge column 120.

This cartridge column 120 includes a column 10 and a housing. The column 10 is the column used in the present invention described above and includes an elastomer tube 11 and separation members 12 (see FIG. 1). The housing includes a cylindrical holder 121, inside of which the column 10 is disposed, first caps 122a that are fitted into ends of the holder 121, and second caps 123 screwed into the ends of the holder 121 from the outer sides of the first caps 122. The housing further includes a spacer 124 disposed between the holder 121 and the column 10, and O-rings 125 disposed between the first caps 122 and the column 10. When the inner diameter of the holder 121 is approximately equal to or slightly larger than the outer diameter of the column 10, the spacer 124 is not required to be provided.

The holder 121 has a thread formed at its outer peripheral surface. The inner diameter of the holder 121 is approximately equal to or slightly larger than the outer diameter of the spacer 124. The holder 121 includes protrusions 121a to serve as a rotation preventing means at both ends thereof.

Each of the first caps 122 is provided with a columnar insertion part 122b that is inserted into the holder 121. An annular groove where the O-ring 125 is to be disposed is formed at the end face of each insertion part 122b. The O-ring 125 is disposed in the groove. The first caps 122 and the O-rings 125 can move to press the end faces of the elastomer tube. When the first caps 122 and the second caps 123 are attached to the holder 121, the first caps 122 and the O-rings 125 move to press the end faces of the elastomer tube, and thereby the end faces are pressed. In other words, the first caps 122 and the O-rings 125 serve as pressing members. Furthermore, the first caps 122 each are provided with notches 122a to serve as a rotation preventing means. The notches 122a are formed so as to engage with the protrusions 121a of the holder 121 when the first caps 122 are fitted into the holder 121. When the protrusions 121a and the notches 122a are engaged with each other, the first caps 122 are prevented from rotating with respect to the holder 121. Accordingly, the first caps can be prevented from rotating with respect to the end faces of the elastomer tube disposed inside the holder 121. This prevents the elastomer tube from rotating inside the holder 121 and being twisted along the longitudinal direction when the second caps 123 are to be screwed to the holder 121. Therefore, damage to the separation members disposed inside the elastomer tube can be prevented. The first caps 122 each also include a feed port 122c formed therein, through which material to be separated is fed.

The second caps 123 each have a columnar concave part 123a formed therein and include a through hole 123b formed at the bottom surface thereof. The through holes 123b serve to feed material to be separated into the feed ports 122c of the first caps 122. The concave parts 123a each have a thread groove that is formed at the inner peripheral surface thereof and engages with the thread of the holder 121. With the second caps 123 having been attached to the holder 121, the head portions of the first caps 122 are housed in the concave parts 123a.

The first caps 122 are fitted to the ends of the holder 121, and the second caps 123 are then screwed into the holder 121 from the outer sides of the first caps 122. Accordingly, the end faces of the elastomer tube and the first caps 122 as well as the O-rings 125 come into close contact with each other, and thereby material to be separated can be prevented from leaking as in the case of the cartridge column 70 shown in FIG. 7.

The pressing members provided for the housing of the cartridge column according to the present invention are not limited to the aforementioned examples. They can have any configurations as long as they are members that can move to press the end faces of the elastomer tube and are provided to be able to move without rotating with respect to the end faces of the elastomer tube. Furthermore, the rotation preventing means also is not limited to the example described above. It also can have any configuration as long as it is a means that can prevent the pressing members from rotating with respect to the end faces of the elastomer tube when the pressing members move. For instance, converse to the example shown in FIG. 12, protrusions can be provided for the first caps 122 and notches can be provided for the holder 121. Moreover, it also is possible that, for instance, engaging parts such as protrusions or grooves are provided as rotation preventing means for the insertion parts 122b of the first caps 122 and engage with engaging parts formed as rotation preventing means inside the holder 121 when the engaging parts of the insertion parts 122b are inserted into the holder 121.

### [Other examples of column and cartridge column]

In the above-mentioned examples of the column, the elastomer tube 11 and the separation members 12 can be formed monolithically so as not to be detached. Such a column can be formed by applying liquid elastomer onto the outer peripheral surfaces of the separation members 12 and drying it (if necessary, further curing it). The elastomer applied to the separation members 12 forms the elastomer tube. Such a column is particularly suitable for the cartridge column shown in FIG. 7. In this column, one separation member 12 or more can be disposed in the elastomer tube 11.

In the examples described above, the housing had a columnar outer shape. However, it can have another outer shape, for example, a rectangular columnar shape.

In the columns used in the present invention, the peripheries of the separation members can be reinforced with other members having no rubber-like elasticity, for example, curable resin (UV curable resin, an adhesive, fluorine resin, and a silicone coating agent), as long as the effects of the present invention can be obtained. Even when the peripheries of the separation members are covered with materials having no rubber-like elasticity, leaks can be prevented from occurring between the separation members and, for example, the heat shrinkable tube by covering the peripheries with a rubber tube.

### EXAMPLES

The following examples are useful for understanding the invention.

First, an elastomer tube and a housing shown in FIG. 3 were prepared. The elastomer tube was produced by processing fluororubber (trade name: Fluorine-containing Rubber Sheet, with a hardness of A/78 (Hs80) manufactured by Tigers Polymer Corporation). FIG. 10 shows a cross-sectional view of the resultant elastomer tube. The elastomer tube 101 shown in FIG. 10 includes a through hole formed of a through hole 101h where a separation member is to be housed and a through hole 101t where no separation member is to be housed, with the through hole 101h and the through hole 101t being connected to each other. The elastomer tube 101 had a total length of 19 mm and an outer diameter D1 of 8.9 mm. In the elastomer tube 101, the portion where the separation member was to be housed had a length L1 of 18.2 mm and an inner diameter d1 of 3.25 mm, and the through hole 101t had an inner diameter d' of 1mm. Furthermore, the portion where the separation member was to be housed had a thickness t1 of 2.83 mm.

A monolithic-type silica porous body (MonoFas) available from GL Sciences Inc. can be used for the separation member of the column of the present invention. For instance, a number of through holes whose average diameter is about 15 µm and a number of fine pores whose average diameter is about 10 nm are formed in the monolithic-type silica porous body that is used for a DNA purification kit I (MonoFas) of GL Sciences Inc. In this example, a silica porous body was used that was equivalent to the above-mentioned monolithic-type silica porous body. The length L2 of one separation member was 2.8 to 3.0 mm, and the diameter D2 thereof was 3.2 to 3.4 mm. Six separation members that were identical to the one described above were disposed inside the elastomer tube. The sum of the lengths of the six separation members was 18 mm.

Each hole (hole 42h shown in FIG. 3) of the cap had a depth Lh of 7.5 mm and a diameter Dh of 9 mm.

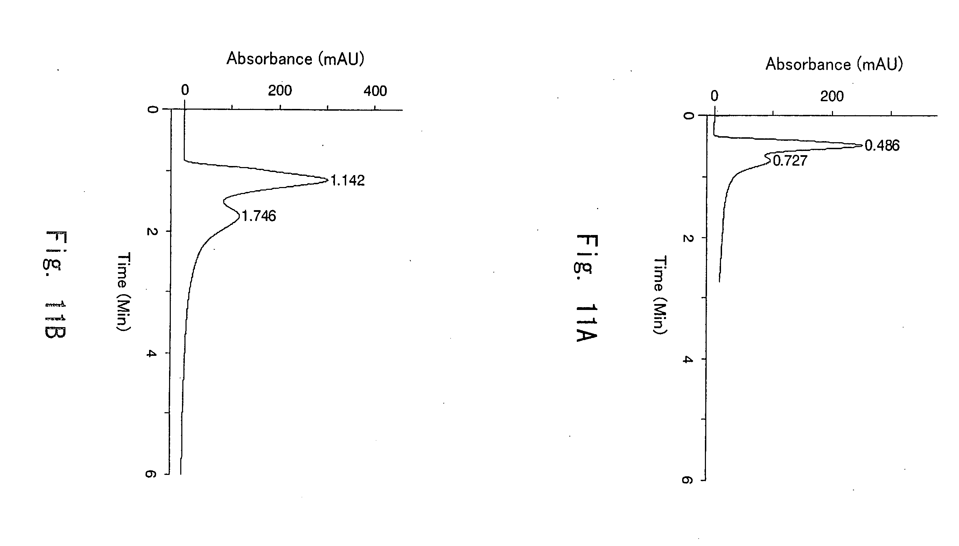

This cartridge column was assembled and liquid chromatography was carried out. A liquid mixture of hexane (98 vol.%) and isopropyl alcohol (2 vol.%) was used for a mobile phase, and the flow rate was 0.5 ml/min or 0.2 ml/min. The material to be separated was a mixture of toluene, 2,6-dinitrotoluene, and 1,2-dinitrobenzene. The material was detected using ultraviolet rays with a wavelength of 210 nm. The detection result obtained at a flow rate of 0.5 ml/min is shown in FIG. 11A, and that obtained at a flow rate of 0.2 ml/min is shown in FIG. 11B. As shown in FIGs. 11A and 11B, the use of said cartridge column allowed toluene/2,6-dinitrotoluene and 1,2-dinitrobenzene to be separated and detected.

On the other hand, for comparison, a column was produced by placing separation members into a heat shrinkable tube (Penntube (product name), manufactured by Penn & Nitto Corp.) formed of FEP, shrinking the heat shrinkable tube with heat, and inserting them into a tube made of resin. With this column of this comparative example, the liquid chromatography was carried out by the same method as in the above. As a result, a single high peak was observed in the early stage after start of measurement and no peaks other than that were observed. It is believed that this single peak was observed because the mobile phase and material to be measured did not pass through the separation members but leaked in the column. In this manner, leakage occurred and normal measurement was not possible in some cases when the heat shrinkable tube was used.

In the above, embodiments of the present invention were described using examples.

### Industrial Applicability

The present invention can be used for chromatography. The column and cartridge column of the present invention can be used, for example, for liquid chromatography, gas chromatography, separation analyses, and apparatuses for them. The column and cartridge column of the present invention make it possible to separate various substances, for example, organic compounds such as protein and peptide.

## Claims

1. A cartridge column (120) comprising a column (10) that is used for chromatography and a housing (40) for holding the column,
wherein the column comprises a tube (11) and at least one separation member (12) disposed inside the tube, and
the housing includes a pressing member (122,125) that can move to press an end face of the tube ;
the cartridge column being **characterized in that**
said at least one separation member is a columnar monolithic separation member (12) and is a vitreous porous body,
said tube is an elastomer tube,
said housing further includes a rotation preventing means (121a,122a) for preventing the pressing member from rotating with respect to the end face of the tube when the pressing member moves.

2. The cartridge column (30) according to claim 1, wherein the housing (40) holds the column (10) while pressing two end faces (11e) of the tube (11).

3. The cartridge column (30) according to claim 1, wherein the housing (40) holds the column (10) while pressing two end faces (11e) and outer peripheral surface (11p) of the tube (11).

4. The cartridge column (30) according to any one of claims 1 to 3, wherein in the housing (40), the tube is compressed along the direction of the tube's central axis.

5. The cartridge column (70) according to any one of claims 1 to 4, wherein a plurality of columns (10a) identical to the column (10) are disposed inside the housing.

6. The cartridge column (80) according to any one of claims 1 to 5, wherein the housing includes a cylindrical holder (81), inside of which the column (10) is disposed, and the holder (81) can divide into two half-shells.

7. The cartridge column (80) according to any one of claims 1 to 6,
wherein the housing includes a cylindrical holder (121) inside of which the column (10) is disposed, and a spacer (124) disposed between the holder (121) and the column (10).

8. The cartridge column (80) according to any one of claims 1 to 7, wherein the tube (11) is a rubber tube.

9. The cartridge column (80) according to any one of claims 1 to 8, wherein the column is monolithic so that the separation member (12) and the tube (11) cannot be detached.

10. The cartridge column (80) according to any one of claims 1 to 8, wherein the separation member (12) is disposed detachably inside the tube (11).

11. The cartridge column (80) according to claim 10, wherein a plurality of separation members (12) identical to the separation member are disposed inside the tube (11).

12. The cartridge column (80) according to any one of claims 1 to 11, wherein the separation member (12) is a vitreous porous body formed by a sol-gel method.

13. The cartridge column (80) according to any one of claims 1 to 12, wherein the vitreous porous body has a chemically modified surface.

## Patentansprüche

1. Kassettensäule (120), die eine Säule (10), die zur Chromatografie verwendet wird, und ein Gehäuse (40) zum Halten der Säule umfaßt,
wobei die Säule eine Röhre (11) und mindestens ein im Inneren der Röhre angeordnetes Trennungselement (12) und
das Gehäuse ein Drückelement (122, 125) enthält, das sich bewegen kann, um gegen eine Endfläche der Röhre zu drücken,
wobei die Kassettensäule **dadurch gekennzeichnet, daß**
das mindestens eine Trennungselement ein säulenartiges monolithisches Trennungselement (12) und ein glasartiger poröser Körper ist,
die Röhre eine elastomere Röhre ist, und
das Gehäuse ferner ein Rotationsverhinderungsmittel (121a, 122a) enthält, um zu verhindern, daß sich das Drückelement relativ zu der Endfläche der Röhre dreht, wenn sich das Drückelement bewegt.

2. Kassettensäule (30) nach Anspruch 1, wobei das Gehäuse (40) die Säule (10) hält, während es gegen zwei Endflächen (11e) der Röhre (11) drückt.

3. Kassettensäule (30) nach Anspruch 1, wobei das Gehäuse (40) die Säule (10) hält, während es gegen zwei Endflächen (11e) und eine Außenumfangsfläche (11p) der Röhre (11) drückt.

4. Kassettensäule (30) nach einem der Ansprüche 1 bis 3, wobei die Röhre in dem Gehäuse (40) entlang der Richtung ihrer Mittelachse zusammengedrückt wird.

5. Kassettensäule (70) nach einem der Ansprüche 1 bis 4, wobei mehrere Säulen (10a), die mit der Säule (10) identisch sind, im Inneren des Gehäuses angeordnet sind.

6. Kassettensäule (80) nach einem der Ansprüche 1 bis 5, wobei das Gehäuse einen zylindrischen Halter (81) enthält, in dem die Säule (10) angeordnet ist, und der Halter (81) sich in zwei Halbschalen teilen kann.

7. Kassettensäule (80) nach einem der Ansprüche 1 bis 6, wobei das Gehäuse einen zylindrischen Halter (121), in dem die Säule (10) angeordnet ist, und einen Abstandshalter (124), der zwischen dem Halter (121) und der Säule (10) angeordnet ist, enthält.

8. Kassettensäule (80) nach einem der Ansprüche 1 bis 7, wobei die Röhre (11) eine Gummiröhre ist.

9. Kassettensäule (80) nach einem der Ansprüche 1 bis 8, wobei die Säule monolithisch ist, so daß das Trennungselement (12) und die Röhre (11) nicht voneinander gelöst werden können.

10. Kassettensäule (80) nach einem der Ansprüche 1 bis 8, wobei das Trennungselement (12) herausnehmbar im Inneren der Röhre (11) angeordnet ist.

11. Kassettensäule (80) nach Anspruch 10, wobei mehrere Trennungselemente (12), die mit dem Trennungselement identisch sind, im Inneren der Röhre (11) angeordnet sind.

12. Kassettensäule (80) nach einem der Ansprüche 1 bis 11, wobei das Trennungselement (12) ein glasartiger poröser Körper ist, der mittels eines Sol-Gel-Verfahrens hergestellt wird.

13. Kassettensäule (80) nach einem der Ansprüche 1 bis 12, wobei der glasartige poröse Körper eine chemisch modifizierte Oberfläche aufweist.

## Revendications

1. Colonne de cartouche (120) comportant une colonne (10) qui est utilisée pour la chromatographie et un boîtier (40) destiné à maintenir la colonne,
la colonne comportant un tube (11) et au moins un élément de séparation (12) disposé à l'intérieur du tube, et
le boîtier comprenant un élément de pression (122, 125) qui peut se déplacer afin d'appuyer sur une face d'extrémité du tube ;
la colonne de cartouche étant **caractérisée en ce que**
ledit au moins un élément de séparation est un élément de séparation monolithique en forme de colonne (12) et est un corps poreux vitreux,
ledit tube est un tube en élastomère,
ledit boîtier comprend en outre des moyens de prévention de rotation (121a, 122a) destinés à empêcher l'élément de pression de tourner par rapport à la face d'extrémité du tube quand l'élément de pression se déplace.

2. Colonne de cartouche (30) selon la revendication 1, dans laquelle le boîtier (40) maintient la colonne (10) tout en appuyant sur deux faces d'extrémité (11e) du tube (11).

3. Colonne de cartouche (30) selon la revendication 1, dans laquelle le boîtier (40) maintient la colonne (10) tout en appuyant sur deux faces d'extrémité (11e) et une surface périphérique extérieure (11p) du tube (11).

4. Colonne de cartouche (30) selon l'une quelconque des revendications 1 à 3, dans laquelle, dans le boîtier (40), le tube est comprimé le long de la direction de l'axe central du tube.

5. Colonne de cartouche (70) selon l'une quelconque des revendications 1 à 4, dans laquelle une pluralité de colonnes (10a) identiques à la colonne (10) est disposée à l'intérieur du boîtier.

6. Colonne de cartouche (80) selon l'une quelconque des revendications 1 à 5, dans laquelle le boîtier comprend un support cylindrique (81), à l'intérieur duquel la colonne (10) est disposée, et le support (81) peut se diviser en deux demi-coquilles.

7. Colonne de cartouche (80) selon l'une quelconque des revendications 1 à 6, dans laquelle le boîtier comprend un support cylindrique (121) à l'intérieur duquel la colonne (10) est disposée, et une entretoise (124) est disposée entre le support (121) et la colonne (10).

8. Colonne de cartouche (80) selon l'une quelconque des revendications 1 à 7, dans laquelle le tube (11) est un tube en caoutchouc.

9. Colonne de cartouche (80) selon l'une quelconque des revendications 1 à 8, dans laquelle la colonne est monolithique de telle sorte que l'élément de séparation (12) et le tube (11) ne peuvent pas être démontés.

10. Colonne de cartouche (80) selon l'une quelconque des revendications 1 à 8, dans laquelle l'élément de séparation (12) est disposé de manière démontable à l'intérieur du tube (11).

11. Colonne de cartouche (80) selon la revendication 10, dans laquelle une pluralité d'éléments de séparation (12) identiques à l'élément de séparation est disposée à l'intérieur du tube (11).

12. Colonne de cartouche (80) selon l'une quelconque des revendications 1 à 11, dans laquelle l'élément de séparation (12) est un corps poreux vitreux formé par un procédé sol-gel.

13. Colonne de cartouche (80) selon l'une quelconque des revendications 1 à 12, dans laquelle le corps poreux vitreux a une surface chimiquement modifiée.
